Europäisches Patentamt

European Patent Office

Office européen des brevets

(19)

(11) Veröffentlichungsnummer: **0 382 920**
**A2**

(12) # EUROPÄISCHE PATENTANMELDUNG

(21) Anmeldenummer: **89122872.8**

(22) Anmeldetag: **12.12.89**

(51) Int. Cl.⁵: **B60N 2/16**

(30) Priorität: **15.02.89 DE 3904482**

(43) Veröffentlichungstag der Anmeldung:
**22.08.90 Patentblatt 90/34**

(84) Benannte Vertragsstaaten:
**DE ES FR GB SE**

(71) Anmelder: **Brose Fahrzeugteile GmbH & Co. KG**
**Postfach 1353 Ketschendorfer Strasse 38-50**
**D-8630 Coburg(DE)**

(72) Erfinder: **Kaesling, Heinz**
**Waldstrasse 51**
**D-8621 Grub a. Forst(DE)**
Erfinder: **Taubmann, Werner**
**Lauterburgstrasse 6**
**D-8639 Lautertal(DE)**

(74) Vertreter: **Pretzell, Hellmut, Dipl.-Ing.**
**Brose Fahrzeugteile GmbH & Co.**
**Kommanditgesellschaft Patentabteilung**
**Postfach 1353**
**D-8630 Coburg(DE)**

(54) **Sitzverstellung, insbesondere für einen Kraftfahrzeugsitz.**

(57) Sitzverstellung für einen Fahrzeugsitz mit einer Verstelleinrichtung, die mindestens einen Antriebsmotor und ein Verstellgetriebe umfaßt, welches ein auf einem mit einer Halteplatte (9) drehfest verbundenen Stufenbolzen (10) drehbar gelagertes Zahnrad (11) aufweist. Ein elastischer Ring (20) mit einer axialen Anlauffläche (25) füllt einen Zwischenraum (19) zwischen dem Stufenbolzen (10) und dem Zahnrad (11) axial aus.

FIG. 2

EP 0 382 920 A2

## Sitzverstellung, insbesondere für einen Kraftfahrzeugsitz

Die Erfindung betrifft eine Sitzverstellung nach dem Oberbegriff des Anspruchs 1.

Sitzuntergestelle von Fahrzeugsitzen sind häufig so konzipiert, daß gleichzeitig mit einer nach vorn gerichteten Verstellbewegung des Fahrzeugsitzes eine Absenkung des Fahrzeugsitzes verbunden ist. Dies wird durch die Verschiebung des Fahrzeugsitzes auf einer gegenüber dem Fahrzeugboden geneigten Verstellebene erreicht. Hierbei unterstützt die auf das Sitzuntergestell ausgeübte Sitzkraft mit einer parallel zur Verstellebene gerichteten Komponente die von einem über einen Antriebsmotor angetriebenen Verstellgetriebe ausgeführte Verstellbewegung.

Die Geschwindigkeit, die der durch die Sitzkraft beschleunigte Fahrzeugsitz annimmt, liegt im Bereich der Umfangsgeschwindigkeit des den Fahrzeugsitz antreibenden, bspw. in eine Zahnstange eingreifenden Ritzels. Hierdurch können im Zusammenwirken mit dem zwischen den einzelnen Zahnrädern bestehenden Eingriffsspiel Lastwechselreaktionen hervorgerufen werden, die sich für die Fahrzeuginsassen in einer unangenehmen Geräuschentwicklung (Überholgeräusche) äußern und zudem mit einem erhöhten Verschleiß verbunden sind.

Teilweise konnte hier bereits durch den Einbau einer Bremseinrichtung in das Verstellgetriebe, wie es unter anderem die DE-OS 31 02 402 und die DE-PS 35 19 058 zeigen, Abhilfe geschaffen werden. Derartige Bremseinrichtungen sind jedoch ohne Einfluß auf eine mögliche Geräuschentwicklung in der Untersetzungsstufe des in der Regel als Planetengetriebe ausgeführten Verstellgetriebes.

Eine derartige Untersetzungsstufe ist zumeist aus mehreren über Stufenbolzen mit einem Planetenrad-Träger verbundenen Planetenrädern gebildet. Die Planetenräder sind jeweils auf den Stufenbolzen gleitgelagert. Hieraus ergibt sich, daß zwischen einem Stufenbolzen und einem Planetenrad ein ausreichend großes Spiel vorhanden sein muß, um auch bei ungleichmäßiger Erwärmung der Bauteile eine einwandfreie Funktion zu ermöglichen.

Dieses notwendige Spiel wirkt sich jedoch nachteilig beim Auftreten von Lastwechselreaktionen aus, da dann das Planetenrad gegenüber dem Stufenbolzen eine radiale Bewegung ausführt, die je nach Stärke des Lastwechsels zu einem Schlagen der Bohrungsoberfläche des Planetenrades gegen die Mantelfläche des Stufenbolzens führt. Neben einer störenden Geräuschentwicklung ist dies natürlich mit einem erhöhten Verschleiß der einander berührenden Bauteile verbunden.

Aus der DE-PS 32 27 222 ist eine Sitzverstelleinrichtung insbesondere für einen Kraftfahrzeugsitz bekannt, die aus einem mit der Rückenlehne verbundenen schwenkbaren Gelenkteil und einem mit dem Sitzteil verbundenen festen Gelenkteil besteht, die über eine Schwenkachse miteinander verbunden und gegeneinander verschwenkbar sind. Die Schwenkachse weist in ihrem mittleren Bereich einen Exzenterabschnitt auf, der sich in einem dem festen Gelenkteil zugeordneten Stirnrad drehbar abstützt, das mit der Innenverzahnung eines dem schwenkbaren Gelenkteil zugeordneten Innenzahnkranzes kämmt.

Eine als Taumelgetriebe ausgebildete Ver- und Feststelleinrichtung bestimmt die Lage der festen und schwenkbaren Gelenkteiles zueinander und weist eine mit dem Exzenter verbundene Handhabe auf, die auf einer Seite des Sitzes angeordnet ist. In einer Ausnehmung des Stirnrades ist ein elastischer Ring angeordnet, der das feste Gelenkteil auf der Schwenkachse elastisch abstützt, damit eine definierte und in Richtung auf den Zahneingriff wirkende Einstellkraft zur Eleminierung des Zahnflankenspiels und des Lagerspiels erzeugt wird.

Aufgabe der vorliegenden Erfindung ist es, eine Sitzverstellung der eingangs genannten Art so zu verbessern, daß Relativbewegungen infolge Lastwechselreaktionen zwischen dem Planetenrad und dem Stufenbolzen gedämpft werden, ohne das für die einwandfreie Funktion der Untersetzungsstufe notwendinge axiale sowie radiale Spiel zwischen dem Planetenrad und dem Stufenbolzen zu beeinflussen.

Diese Aufgabe wird durch die kennzeichnenden Merkmale des Anspruchs 1 gelöst.

Der Erfindung liegt der Gedanke zugrunde, durch Einfügung eines elastischen Dämpfungsglieds zwischen dem Planetenrad und dem Stufenbolzen eine Verzögerung der durch Lastwechsel hervorgerufenen Beschleunigungen des Planetenrads gegenüber dem Stufenbolzen zu erreichen, so daß es lediglich zu einer abgebremsten Berührung zwischen den Bauteilen kommt. Hiermit ist weder eine störende Geräuschentwicklung noch ein erhöhter Bauteileverschleiß verbunden.

Erfindungsgemäß ist im Zwischenraum zwischen dem Stufenbolzen und dem Zahnrad ein eine axiale Anlauffläche aufweisender elastischer Ring angeordnet, der diesen Zwischenraum axial ausfüllt. Hierdurch werden sämtliche auf grund des Einbauspiels zwischen dem Stufenbolzen und dem Zahnrad möglichen Relativbewegungen gedämpft. Dies gilt sowohl für ein radiales Gegeneinanderschlagen oder Verkanten der Bauteile als auch für mögliche Axialschläge, bspw. bei Zahnrädern mit Schrägverzahnung.

Aufgrund der Elastizität des Rings wird die durch das Spiel ermöglichte Relativbewegung lediglich gedämpft jedoch nicht eingeschränkt, so daß die einwandfreie Funktion der Untersetzungsstufe nicht beeinträchtigt wird.

Die erfindungsgemäße Vorrichtung kommt in einem als Planetengetriebe ausgeführten Verstellgetriebe zum Einsatz, dessen Untersetzungsstufe aus einer als Planetenrad-Träger ausgebildeten Halteplatte besteht, die mehrere mit Planetenrädern bestückte Stufenbolzen aufweist.

Gemäß einer vorteilhaften Weiterbildung ist der elastische Ring mit einem Planetenrad derart verbunden, daß die axiale Anlauffläche des Rings mit einer durch einen Absatz eines Stufenbolzens gebildeten Kontaktfläche in Berührung steht. Durch die Anlauffläche wird eine sichere Abstützung des Planetenrads gegenüber dem Stufenbolzen erreicht. Zudem wird durch das großflächige Anliegen der Verschleiß am Ring infolge der gedämpften Relativbewegung zwischen dem Planetenrad und dem Stufenbolzen begrenzt.

Vorteilhafterweise ist der elastische Ring in einer Ausnehmung des Planetenrads so angeordnet, daß seine Umfangsfläche an einer Radialfläche und seine dem Planetenrad zugewandte Seitenfläche an einer Axialfläche der Ausnehmung anliegt. Diese Anordnung des elastischen Rings sorgt auch für eine sichere Abstützung des Rings gegenüber dem Planetenrad.

Nach einem weiteren vorteilhaften Merkmal der Erfindung ist der elastische Ring als Gummiring ausgebildet und in die Ausnehmung des Planetenrades einvulkanisiert. Hierdurch ergibt sich eine besonders haltbare Verbindung zwischen dem Ring und dem Planetenrad, die keine zusätzlichen Verbindungselemente wie z.B. Nieten oder dergleichen notwendig macht.

Diese den Ring durchdringenden Befestigungselemente würden sich ohnehin nachteilig auf die Dämpfungseigenschaften des Rings auswirken. Weiterhin bietet diese Art der Verbindung den Vorteil, daß die aus Planetenrad und Ring bestehende Einheit auf konventionellen Montageautomaten, wie z.B. einer Rundtischnietmaschine zum Vernieten der Stufenbolzen mit dem Planetenrad-Träger, verarbeitet werden kann.

Vorteilhafterweise ist die Kontaktfläche des Stufenbolzens poliert. Dies führt zu einer Minimierung des Verschleißes in der Anlauffläche des Gummirings.

Die Erfindung wird nachstehend an Hand eines in der Zeichnung dargestellten Ausführungsbeispiels näher erläutert. Es zeigen:

Figur 1 einen Querschnitt durch ein Verstellgetriebe und

Figur 2 ein mit einem Planetenrad-Träger mittels eines Stufenbolzens verbundenes Planetenrad in einer Ausschnittsvergrößerung der Figur 1.

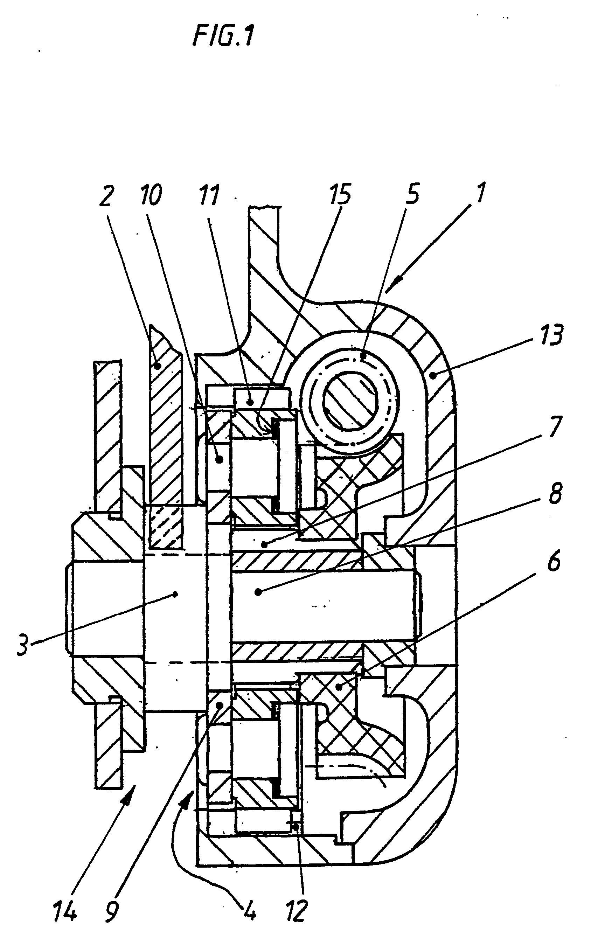

Das in Figur 1 vereinfacht dargestellte Verstellgetriebe 1 ist Teil einer Sitzverstellung und greift in eine Zahnstange 2 oder ein Zahnsegment mit einem Ritzel 3 ein. Dabei ist die Zahnstange 2 oder das Zahnsegment mit einem hier nicht näher dargestellten, nach vorn geneigten Sitzuntergestell verbunden.

Das Verstellgetriebe 1 ist an einem gegenüber der Zahnstange 2 zu verstellenden Teil des Fahrzeugsitzes angebracht, welcher sich aufgrund des geneigten Sitzuntergestells bei einer Längsverstellung des Fahrzeugsitzes nach vorn oder einer Lehnenverstellung nach hinten gleichzeitig dem Fahrzeugboden annähert. Bei einer Verstellung des Fahrzeugsitzes nach vorn unterstützt die parallel zur Zahnstange 2 gerichtete Komponente der auf das Untergestell wirkenden Sitzkraft die Verstellbewegung.

Aufgrund des vorhandenen Zahnspiels zwischen den Zähnen des Ritzels 3 und der Zahnstange 2 kann es demzufolge bei einer Sitz- oder Lehnenverstellung zu Lastwechseln beim Zahneingriff kommen. Diese Lastwechsel setzen sich in Richtung des Momentenflusses in das Innere des Verstellgetriebes 1 fort und werden so insbesondere auf eine Untersetzungsstufe 4 übertragen.

Zur Verdeutlichung dieses Zusammenhangs soll hier die Kraftübertragung innerhalb des Verstellgetriebes 1 näher erläutert werden:

Eine über eine nicht dargestellte Verbindungswelle mit dem Antriebsmotor verbundene Schnecke 5 greift in die Verzahnung eines Schneckenrades 6 ein. Das Schneckenrad 6 ist starr mit einem Sonnenrad 7 verbunden, welches auf einem zylindrischen Axialabschnitt 8 des Ritzels 3 drehbar gelagert ist. An einem mit dem Ritzel 3 drehfest verbundenen Planetenrad-Träger 9 sind auf Stufenbolzen 10 vier Planetenräder 11 gelagert.

Die Planetenräder 11 greifen sowohl in die Verzahnung des Sonnenrads 7 als auch in eine Innenumfangsverzahnung 12 eines Getriebegehäuses 13 ein. Zur Verstellung des Fahrzeugsitzes gegenüber dem Untergestell ragt das Ritzel 3, eine Gehäuseöffnung 14 durchsetzend, über den Außenumriß des Getriebegehäuses 13 hervor und befindet sich im Eingriff mit der Zahnstange 2.

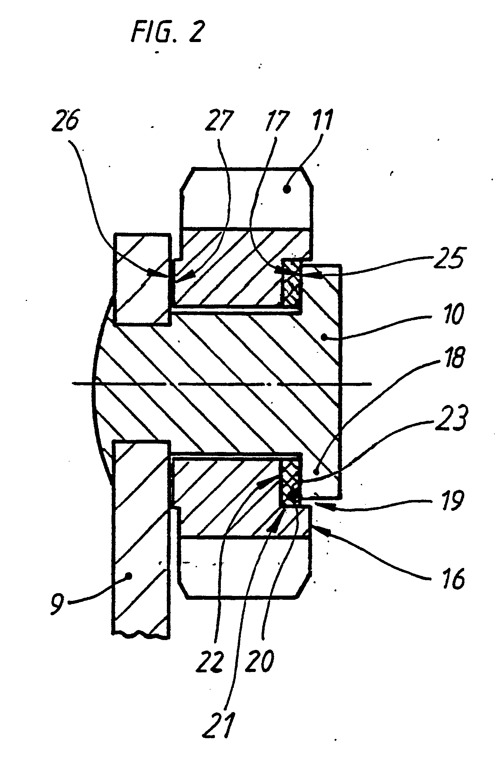

Figur 2 zeigt in einer Ausschnittsvergrößerung der Darstellung gemäß Figur 1 ein mit dem Planetenrad-Träger 9 mittels eines Stufenbolzens 10 verbundenes Planetenrad 11. Der Stufenbolzen 10 ist dabei mit dem Planetenrad-Träger 9 vernietet.

In einem im wesentlichen durch einen Rezeß 15 an einer Stirnseite 16 des Planetenrads 11 und einer axialen Kontaktfläche 17 eines Absatzes 18 des Stufenbolzens 10 begrenzten, ringförmigen Zwischenraum 19 befindet sich ein Gummiring 20.

Der Gummiring 20 ist mit seiner Umfangsfläche 21 und einer Seitenfläche 22 auf die Radialfläche 23 und die Axialfläche 24 des Rezesses 15 aufvulkanisiert. Der Gummiring 20 weist einen rechteckförmigen Querschnitt auf, der so be messen ist, daß sich zwischen einer axialen Anlauffläche 25 und der Kontaktfläche 17 des Stufenbolzens 10 sowie zwischen einer Stirnseite 26 des Planetenrads 11 und einer Gegenfläche 27 des Planetenrad-Trägers 9 ein leichter Anlagedruck ergibt.

Hierdurch wirkt der Gummiring 20 sowohl dämpfend auf Lastwechselreaktionen in Umfangsrichtung des Planetenrads 11 als auch radial hierzu. Der Gummiring 20 gleicht im unbelasteten Zustand des Planetenrads 11 vorhandenes axiales Spiel zwischen dem Planetenrad 11 und dem Planetenrad-Träger 9 bzw. dem Absatz 18 des Stufenbolzens 10 aus. Bei Belastung hingegen wird der Gummiring 20 elastisch verformt, so daß sich das für die einwandfreie Funktion der Untersetzungsstufe 4 notwendige Spiel zwischen den metallischen Oberflächen, nämlich der Stirnseite 26 und der Gegenfläche 27, selbsttätig einstellt.

Aufgrund der elastischen, dämpfenden Eigenschaften des Gummirings 20 werden die Lastwechselreaktionen, die ohne den Gummiring 20 zu einer störenden Geräuschentwicklung und erhöhtem Verschleiß zwischen dem Plantenrad 11 und dem Stufenbolzen 10 führen würde, im Gummiring 20 abgebaut.

Der Gummiring 20 wirkt nicht nur Lastwechselreaktionen in Umfangsrichtung des Planetenrads 11 entgegen, sondern verhindert auch ein aufgrund des notwendigen Radialspiels zwischen dem Planetenrad 11 und dem Stufenbolzen 10 mögliches Kippen des Plantenrads 11.

Die vorliegende Erfindung beschränkt sich in ihrer Ausführungsform nicht auf das vorstehend dargestellte bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Ansprüche**

1. Sitzverstelleinrichtung, insbesondere für einen Kraftfahrzeugsitz, mit mindestens einem Antriebsmotor und einem als Planetengetriebe ausgeführten Verstellgetriebe, welches ein auf einem mit einem Planetenrad-Träger drehfest verbundenen Stufenbolzen drehbar gelagertes Planetenrad aufweist,
**dadurch gekennzeichnet, daß**
ein elastischer Ring (20) in einem axialen Zwischenraum (19) zwischen dem Stufenbolzen (10) und dem Zahnrad (11) angeordnet ist, wobei der elastische Ring (20) einerseits mit dem Planetenrad (11) verbunden ist und andererseits eine axiale Anlauffläche (25) des Rings (20) mit einer durch einen Absatz (18) des Stufenbolzens (10) gebildeten Kontaktfläche (17) in Berührung steht.

2. Sitzverstellung nach Anspruch 1, **dadurch gekennzeichnet,** daß der elastische Ring (20) in einer Ausnehmung (15) des Planetenrads (11) derart angeordnet ist, daß seine Umfangsfläche (21) an einer Radialfläche (23) und seine dem Planetenrad (11) zugewandte Seitenfläche (22) an einer Axialfläche (24) der Ausnehmung (15) anliegt.

3. Sitzverstellung nach Anspruch 1 oder 2, **dadurch gekennzeichnet,** daß der elasti sche Ring aus einem Gummiring (20) besteht und in die Ausnehmung (15) des Planetenrads (11) einvulkanisiert ist.

FIG.1

FIG. 2